# EUROPEAN PATENT APPLICATION

(11) **EP 4 477 327 A1**
(43) Date of publication of application: **18.12.2024**
(21) Application number: 23179091.6
(22) Date of filing: 14.06.2023
(51) Int. Cl.: B05D 3/06, B05D 5/02, F26B 3/28

(54) **METHOD FOR PREPARING SKIN-TOUCH PANEL AND NANO-MATTE MACHINE FOR SKIN-TOUCH PANEL**

(71) Applicant: Guangdong Purete Mechanical Co., Ltd, Foshan, Guangdong 528300 (CN)
(72) Inventor: MA, Xiaobo, Foshan, 528300 (CN); ZHANG, Mingquan, Foshan, 528300 (CN); YANG, Xiantao, Foshan, 528300 (CN)
(74) Representative: Kehl, Ascherl, Liebhoff & Ettmayr Patentanwälte Partnerschaft mbB

(57) **Abstract**

A method for preparing a skin-touch panel and a nano-matte machine for a skin-touch panel are disclosed. The method includes: S100, painting a surface of a substrate with a primer; S200, applying, via roll coating, a UV nano-matte skin-touch coating material on the surface of the substrate; and S300, pre-curing the UV nano-matte skin-touch coating material via a pre-curing lamp, and further curing the UV nano-matte skin-touch coating material via a plurality of UV nano-lamps. In the present invention, the UV nano-matte skin-touch coating material on the surface of the substrate is irradiated via the pre-curing lamp and the plurality of UV nano-lamps with a wavelength of 185-260 nm in sequence, so that the skin-touch UV coating material on the substrate absorbs UV nano ultraviolet light to form a skin-touch effect, and no skin-touch film is required. The UV nano-lamp has a long service life without frequent replacement during use, thereby reducing the cost and facilitating production. The protection of inert gas is no longer required, which is economical and efficient, and reduces the costs of production and use.

## Description

### TECHNICAL FIELD

The present invention relates to the technical field of decorative panels, and in particular to a method for preparing a skin-touch panel and a nano-matte machine for a skin-touch panel.

### BACKGROUND

Decorative panel is a type of artificial panels with a panel surface having various wood grains or patterns, which is bright and smooth, colorful and beautiful, and also has good physical properties such as high wear resistance, high heat resistance, high cold resistance, and high fire resistance. Skin-touch panels belong to a type of decorative panels.

During preparation of existing skin-touch panels, film pressing needs to be performed on the panels, or matting powder, fluff powder, or silicon resin are added to achieve a skin-touch effect. However, preparing the skin-touch panels in these ways result in a high cost, and the prepared skin-touch panels have a poor tactile sensation effect, and a short service life. Alternatively, the skin-touch panels may be prepared with the 172 nm excimer technology, but nitrogen must be used for protection, and thus the preparation cost is still high.

### SUMMARY

The present invention aims to solve at least one of the technical problems existing in the prior art. To this end, the present invention proposes a method for preparing a skin-touch panel with a low preparation cost and a nano-matte machine for a skin-touch panel.

The method for preparing a skin-touch panel according to an embodiment of a first aspect of the present invention includes: S100, painting a surface of a substrate with a primer; S200, applying, via roll coating, a UV nano-matte skin-touch coating material on the surface of the substrate; and S300, pre-curing the UV nano-matte skin-touch coating material via a pre-curing lamp, and performing surface treatment via a plurality of UV nano-lamps with wavelengths of 185-260 nm.

The method for preparing a skin-touch panel according to embodiments of the present invention has at least the following technical effects. By applying the UV nano-matte skin-touch coating material on the surface of the substrate via roll coating, and then irradiating the UV nano-matte skin-touch coating material via the pre-curing lamp and the plurality of UV nano-lamps with the wavelengths of 185-260 nm in sequence, the skin-touch UV coating material on the substrate absorbs UV nano ultraviolet light to form a skin-touch effect. In comparison with the prior art which adopts a film pressing manner to produce the skin-touch panels, no skin-touch film is required, and the UV nano-lamp has a long service life without frequent replacement during use, thereby reducing the cost and facilitating production. In comparison with the prior art adopting the 172nm excimer technology, the preparation method of the present invention no longer needs the protection of inert gas, which is economical and efficient, reduces the cost of production and use, and can achieve the effect that an ultra-matte skin touch is created on the surface of the substrate; and a matte degree is between 1 GU and 5 GU, and hardness can reach 2-3 H, which can form good protection to the substrate and prolong the service life of the substrate.

According to some embodiments of the present invention, the pre-curing lamp may be an LED lamp, a UV gallium lamp, a mercury lamp or an electrodeless lamp.

According to some embodiments of the present invention, the wavelengths of the plurality of UV nano-lamps are selected from any combination of one or more of wavelengths between 185 nm and 260 nm.

According to some embodiments of the present invention, a coating amount of the coating material in S200 is set as 35-50 g/m².

The nano-matte machine for a skin-touch panel according to an embodiment of a second aspect of the present invention includes a frame, a conveying device, a first curing assembly, and a second curing assembly. The conveying device is installed on a top of the frame for conveying a substrate. The first curing assembly is arranged at an inlet end of the conveying device and located above the conveying device; and the first curing assembly includes the pre-curing lamp. The second curing assembly is arranged on a right side of the first curing assembly and located above the conveying device; and the second curing assembly includes the plurality of UV nano-lamps arranged at intervals in a conveying direction of the conveying device.

The nano-matte machine for a skin-touch panel according to embodiments of the present invention has at least the following technical effects. By arranging the conveying device for conveying the substrate on the frame, and arranging the pre-curing lamp and the plurality of UV nano-lamps above the conveying device, when the substrate is conveyed on the conveying device, the skin-touch UV coating material on the substrate absorbs the UV nano ultraviolet light to form the skin-touch effect. In comparison with the prior art which adopts the film pressing manner to produce the skin-touch panels, no skin-touch film is required, and the UV nano-lamp has a long service life without frequent replacement during use, thereby reducing the cost and facilitating production. In comparison with the prior art adopting the 172 nm excimer technology, the nano-matte machine no longer requires the protection of inert gas, which is economical and efficient, and reduces the cost of production and use.

According to some embodiments of the preset invention, the nano-matte machine further includes a protective cover. The protective cover is installed on the conveying device, and provided with a feed inlet and a discharge outlet corresponding to the inlet end and outlet end of the conveying device; and the pre-curing lamp and the UV nano-lamps are all arranged within the protective cover.

According to some embodiments of the preset invention, the conveying device is a chain conveyor; the frame is provided with a first ventilation and heat dissipation device; the protective cover is provided with a second ventilation and heat dissipation device; and an interior of the frame communicates with an interior of the protective cover.

According to some embodiments of the preset invention, the pre-curing lamp is provided with a first adjustment structure for adjusting a height and an irradiation angle, and each UV nano-lamp is provided with a second adjustment structure for adjusting a height and an irradiation angle.

According to some embodiments of the preset invention, the first adjustment structure has the same structure as the second adjustment structure. Two first adjustment structures are provided, and respectively arranged at two ends of the pre-curing lamp; each first adjustment structure includes a mounting plate, a hoisting rack and a fastening handle; the mounting plate is connected with one end of the pre-curing lamp; the hoisting rack is provided with a vertical through slot and a plurality of horizontal through slots arranged at intervals in an up-down direction; one ends of the horizontal through slots communicate with the vertical through slot; and one end of the fastening handle passes through the vertical through slot and is in threaded connection with the mounting plate.

According to some embodiments of the preset invention, each of the outlet end and the inlet end of the conveying device is provided with a transition roller.

Additional aspects and advantages of the present invention will be set forth in part in the following description, or will be apparent in part from the following description, or may be learned from the practice of the present invention.

### BRIEF DESCRIPTION OF DRAWINGS

Additional aspects and advantages of the present invention will become apparent and comprehensible from the description of embodiments in combination with the following drawings, in which:
Fig. 1 is a schematic structural diagram of a nano-matte machine for a skin-touch panel according to an embodiment of the present invention;
Fig. 2 is a schematic structural diagram illustrating that a conveying device is arranged on the frame;
Fig. 3 is a top perspective diagram illustrating that a pre-curing lamp and UV nano-lamps are located within a protective cover;
Fig. 4 is a bottom schematic structural diagram illustrating that a pre-curing lamp and UV nano-lamps are located within a protective cover;
Fig. 5 is an enlarged diagram of part A in Fig. 2;
Fig. 6 is a schematic structural diagram of a first adjustment structure and a second adjustment structure; and
Fig. 7 is a schematic structural diagram of a first adjustment structure in a certain direction.

Reference numerals: frame 100, first ventilation and heat dissipation device 110, conveying device 200, transmission shaft 210, chain 220, transition roller 230, first curing assembly 300, pre-curing lamp 310, second curing assembly 400, UV nano-lamp 410, protective cover 500, second ventilation and heat dissipation device 510, first adjustment structure 600, mounting plate 610, hoisting rack 620, vertical through slot 621, horizontal through slot 622, fastening handle 630, second adjustment structure 700.

### DETAILED DESCRIPTION

Embodiments of the present invention will be described in detail below. Examples of the embodiments are illustrated in the accompanying drawings, where the same or like reference numerals throughout the figures indicate the same or like elements having the same or like functions. The embodiments described below with reference to the accompanying drawings are exemplary and are intended only to explain the present invention instead of being construed as limiting the present invention.

In the description of the present invention, it should be understood that, descriptions relating to orientation, for example, orientation or positional relationships indicated by "up", "down", "front", "back", "left", "right", etc. are based on the orientation or positional relationships shown in the accompanying drawings, and are to facilitate the description of the present invention and simplify the description only, rather than indicating or implying that the device or element referred to must have a specific orientation or be constructed and operated in a specific orientation, and therefore cannot be construed as limiting the present invention.

In the description of the present invention, the meaning of "several" is one or more, the meaning of "a plurality of" is two or more, "greater than", "less than", "more than", etc. are to be understood to exclude the given figure, and "above", "below", "within", etc. are understood to include the given figure. If "first" and "second", etc. are referred to, it is only for the purpose of distinguishing technical features, and shall not be understood as indicating or implying relative importance or implying the number of the indicated technical features or implying the sequence of the indicated technical features.

In the description of the present invention, unless otherwise explicitly defined, the words such as "set", "install", and "connect" should be understood in a broad sense, and those skilled in the art can determine the specific meanings of the above words in the present invention in a rational way in combination with the specific contents of the technical solutions.

A method for preparing a skin-touch panel according to an embodiment of a first aspect of the present invention, includes:
S 100, painting a surface of a substrate with a primer;
S200, applying, via roll coating, UV nano-matte skin-touch coating material on the surface of the substrate; and
S300, pre-curing the UV nano-matte skin-touch coating material via a pre-curing lamp 310, and performing surface treatment via a plurality of UV nano-lamps 410.

By applying the UV nano-matte skin-touch coating material on the surface of the substrate via roll coating, and then irradiating the UV nano-matte skin-touch coating material via the pre-curing lamp 310 and a plurality of UV nano-lamps 410 with a wavelength of 185-260 nm in sequence, the skin-touch UV coating material on the substrate absorbs UV nano ultraviolet light to form the skin-touch effect. In comparison with the prior art which adopts film pressing manner to produce skin-touch panels, no skin-touch film is required, and the UV nano-lamp 410 has a long service life without frequent replacement during use, thereby reducing the cost and facilitating production. In comparison with the prior art adopting the 172 nm excimer technology, the preparation method of the present invention no longer needs the protection of inert gas, which is economical and efficient, reduces the cost of production and use, and can achieve the effect that ultra-matte skin-touch is created on the surface of the substrate; and a matte degree is between 1 GU and 5 GU, and hardness can reach 2-3 H, which can form good protection to the substrate and prolong the service life of the substrate.

Existing device adopts a 172 nm lamp, and a problem of oxygen inhibition exists due to a short wavelength. Therefore, inert gas (nitrogen) is used for protection, so that a working environment is in an oxygen-free state, avoiding oxygen inhibition, and ensuring that the device can make the panels have a skin effect. Due to the high preparation cost of the 172 nm lamp and the need for nitrogen for protection during the use of the device, the working conditions and the overall cost are relatively high.

The present application adopts a nano-lamp with a wavelength of 185-260 nm. The nano-lamp with the wavelength of 185-260 nm has a wavelength longer than 172 nm, so that the oxygen inhibition problem is minimized, and there is no need for nitrogen protection (as illustrated in below Table 2, the skin-touch effect can be generated under the irradiation of the 185 nm lamp, which further shows that nitrogen protection is not required at a wavelength in this range). The present application does not need nitrogen protection, and the use of the high-priced 172 nm lamp, thereby reducing the requirements on the device. Therefore, the present application can realize a low cost in manufacturing the device, and simplify the maintenance and use, which future reduce the cost.

The following Table 1 shows comparison on glossiness between using the 185 nm nano-lamp and using the 172 nm lamp:

**Test data record table 1 for skin matte panel (from a viewing angle at glossiness of - 60°):**

| Batch sampling | | Using 185 nm nano-lamp | | | Using 172nm lamp | | |
|---|---|---|---|---|---|---|---|
| | | Batch sample 1 | Batch sample 2 | Batch sample 3 | Batch sample 1 | Batch sample 2 | Batch sample 3 |
| Sampling test data (com-plying with the method of GB/T4893.6) | Sampling 1 | 1.6 | 1.7 | 2.1 | 1.3 | 1.2 | 1.4 |
| | | 1.6 | 1.6 | 1.9 | 1.4 | 1.1 | 1.4 |
| | | 1.6 | 1.6 | 2.2 | 1.3 | 1.2 | 1.4 |
| | | 1.6 | 1.6 | 2.0 | 1.5 | 1.1 | 1.4 |
| | | 1.6 | 1.8 | 2.1 | 1.4 | 1.2 | 1.4 |
| | | 1.6 | 1.6 | 1.9 | 1.3 | 1.2 | 1.4 |
| | Sampling 2 | 1.6 | 1.7 | 1.9 | 1.3 | 1.2 | 1.4 |
| | | 1.6 | 1.7 | 2.0 | 1.3 | 1.2 | 1.4 |
| | | 1.6 | 1.7 | 2.0 | 1.3 | 1.2 | 1.4 |
| | | 1.6 | 1.7 | 1.9 | 1.3 | 1.1 | 1.4 |
| | | 1.6 | 1.7 | 1.9 | 1.3 | 1.1 | 1.4 |
| | | 1.7 | 1.7 | 1.9 | 1.3 | 1.1 | 1.4 |
| | Sampling 3 | 1.7 | 1.7 | 1.9 | 1.4 | 1.1 | 1.4 |
| | | 1.7 | 1.7 | 1.9 | 1.4 | 1.1 | 1.4 |
| | | 1.7 | 1.7 | 1.9 | 1.3 | 1.1 | 1.4 |
| | | 1.6 | 1.8 | 1.9 | 1.3 | 1.1 | 1.4 |
| | | 1.6 | 1.7 | 1.9 | 1.3 | 1.2 | 1.4 |
| | | 1.6 | 1.7 | 1.9 | 1.3 | 1.2 | 1.5 |
| | Sampling 4 | 1.6 | 1.7 | 2.0 | 1.3 | 1.2 | 1.4 |
| | | 1.6 | 1.7 | 1.9 | 1.3 | 1.2 | 1.4 |
| | | 1.6 | 1.7 | 1.9 | 1.3 | 1.1 | 1.4 |
| | | 1.6 | 1.7 | 1.8 | 1.3 | 1.1 | 1.4 |
| | | 1.6 | 1.7 | 1.9 | 1.3 | 1.1 | 1.4 |
| | | 1.6 | 1.7 | 1.9 | 1.3 | 1.2 | 1.4 |
| Summary | | Minimum 1.6; Maximum 2.2 | | | Minimum 1.1; Maximum 1.5 | | |

**Test data table 2 for skin-touch panel:**

| Test items | Unit | Standard specified value | Test results | Determination results |
|---|---|---|---|---|
| Glossiness (60°) | | ≤8° | 6° | Qualified |
| Wear resistance | | 1000 r, not lower than level 3 | Level 2 | Qualified |
| Adhesion of paint film | | Not lower than level 2 | Level 1 | Qualified |
| Resistance to liquid | | 10% sodium carbonate solution, 24h; 10% acetic acid solution, 24h. Not lower than level 2 | Level 1 | Qualified |
| Resistance to moisture-heat | | 70°C, 20 min, not lower than level 2 | Level 1 | Qualified |
| Resistance to dry-heat | | 70°C, 20 min, not lower than level 2 | Level 1 | Qualified |
| Resistance to temperature difference between cold and hot | | High temperature (40±2) °C | No bubbling, no crack and apparent loss of gloss | Qualified |
| | | Relative humidity (95±3)%, 1 h | | |
| | | Low temperature (-20±2) °C, 1 h, 3 cycles | | |
| | | No bubbling, no crack and apparent loss of gloss | | |
| Impact resistance | | Impact height 50 mm, not lower than level 3 | Level 1 | Qualified |
| Soluble lead | mg/kg | ≤90 | Not detected (limit of detection: 0.04) | Qualified |
| Soluble cadmium | mg/kg | ≤75 | 2 | Qualified |
| Anti-fingerprint | | Fingerprint can disappear within 30 s | Fingerprint disappears within 30 s | Qualified |
| Surface touch feeling | | Not lower than level 4 | Level 5 | Qualified |

It can be seen from the above Table 1 that the glossiness of the skin matte panel after irradiation with the 185 nm nano-lamp is 1.6-2.2 GU, and the glossiness of the skin matte panel after irradiation with the 172 nm excimer lamp under nitrogen protection is 1.1-1.5 GU. From the above data, it can be known that there is a small difference in the glossiness between the panel using the 172 nm lamp and the panel using the 185 nm lamp, and the glossiness effect is almost the same. Moreover, it can be seen from Table 2 that in a natural environment, the UV nano-matte skin-touch coating material, irradiated by the 185 nm nano-lamp, on the panel can also reach a level 5 surface skin touch. That is, the panel can be produced in the natural environment by using the 185 nm nano-lamp (without nitrogen protection), the glossiness effect is almost the same, and the skin-touch effect can also be achieved, with a lower input cost and lower use and maintenance costs, which is very suitable for mid- and low-end market demands.

In some embodiments of the present invention, irradiation energy of the pre-curing lamp 310 is set as 50%, and irradiation energy of the nano-lamp is set as 100%, so as to achieve a fluffy and silky ultra-matte skin touch, which enriches the furniture finishing effect, and enhances the use value of a product.

In a further embodiment of the present invention, the wavelengths of the plurality of UV nano-lamps 410 are any combination of one or more of wavelengths between 185 nm and 260 nm, so as to achieve the fluffy and silky ultra-matte skin touch, which enriches the furniture finishing effect, and enhances the use value of the product.

In a further embodiment of the present invention, the coating amount of the coating material in S200 is set as 25-40 g/m², so as to achieve the fluffy and silky ultra-matte skin touch, which enriches the furniture finishing effect, and enhances the use value of the product.

### Specific embodiment 1:

1. Dust removal machine: dust and foreign matters are cleaned from a surface of a substrate, so as to prevent the dust on the substrate from affecting adhesion between a coating material and the substrate.
2. Single roller: a UV adhesion primer is applied on the surface of the substrate via roll coating, where the coating amount is controlled at 12-15 g/m².
3. UV dryer: the UV adhesion primer applied on the surface of the substrate via roll coating is dried, where the energy requirement is as follows: UVA= 150-200 mJ/m².
4. Forward and reverse roller: a layer of UV sanding primer is applied on the dried UV adhesion primer via roll coating, where the roll coating includes performing roll coating once in a forward direction and once in an opposite direction, and the coating amount is controlled at 30-40 g/m².
5. UV drying: the UV sanding primer is dried and cured, where the energy is as follows: UVA= 280-300 mJ/m².
6. Sanding: the surface of the finished UV sanding primer is sanded to improve the bonding ability between UV skin-touch topcoat and primer, so that adhesion of the topcoat is better.
7. Dust removal: the surface of the substrate after sanding is cleaned, so as to reduce interference of the dust produced after sanding with the topcoat.
8. Forward and reverse roller: a UV nano-matte skin-touch coating material is applied on the surface of the substrate via roll coating, where the coating amount of the coating material is controlled at 35-40 g/m², and the process requires operation in a dust-free room, so as to reduce interference of the dust and debris with the coated surface.
9. Drying of UV nano-matte skin-touch coating material: the UV nano-matte skin-touch coating material is pre-cured via a pre-curing lamp 310, and then further cured via a plurality of UV nano-lamps 410, matte treatment is performed on the coated coating material to generate a skin-touch effect; or a nano-matte machine for a skin-touch panel of the present invention is adopted, where pre-curing energy requires an adjustment value of 50%, and the nano-matte lamps are fully turned on.
10. UV lamp drying: the finished and shaped substrate with a nano-matte skin-touch effect is dried, where the energy is required to reach UVA= 400-450 mJ/cm², to fully dry the topcoat.

### Specific embodiment 2:

1. Light sanding of rough panel: light sanding treatment is performed on burrs, etc. on a surface of a substrate.
2. Dust removal: dust, foreign matters, etc. are cleaned from the surface of the substrate, so as to prevent the dust on the substrate from affecting adhesion between a coating material and the substrate.
3. Patching with single roller: tube pores and uneven spots of the substrate are filled and sealed with putty paint to keep the surface of the substrate smooth, which lays a good foundation for subsequent process steps, where the coating amount is 40-50 g/m².
4. UV drying: the UV putty paint applied via roll coating is dried, where the energy requirement is as follows: UVA= 150-200mJ/cm².
5. Patching with single roller: the substrate is further filled with the putty paint to completely fill and level up the uneven spots.
6. UV drying: the substrate coated with the putty paint is dried and cured, where the energy is required to reach 250-300 mJ/cm².
7. Sanding: the filled and sealed substrate is sanded, and the positions with protrusions on the coating surface are polished, so as to make the coating surface smooth, improve a hand feeling, and enhance adhesion of a next coating material.
8. Dust removal: surface dust treatment is performed on the substrate after sanding, so as to avoid sanding dust from affecting adhesion between the next coating material and the UV coating.
9. Forward and reverse roller: a UV sanding primer is applied on the substrate sealed with the putty paint via roll coating, where the coating amount is controlled at 20-35 g/m².
10. UV drying: the UV sanding primer is dried and cured, where the energy is required to reach UVA= 150-200 m/cm².
11. Forward and reverse roller: the UV sanding primer is continued to be applied via roll coating, where the coating amount is controlled at 30-40g/cm²; and the purpose of applying the sanding primer via roll coating again is to make the surface of the substrate more smooth and full, to reduce the usage of the topcoat.
12. UV drying: the energy is required to reach UVA = 280-300 mJ/cm², and the UV sanding primer is completely dried and cured.
13. Sanding: sanding treatment is performed on the UV sanding primer on the surface of the substrate, so as to polish off bright spots on the surface.
14. Dust cleaning: dust removal treatment is performed on the substrate after polishing, so as to reduce interference of the dust with the topcoat coating.
15. Forward and reverse roller: a nano-matte skin-touch topcoat is applied on the surface of the substrate via roll coating, where the coating amount of the coating material is controlled at 35-40 g/m², and this process is required to be performed in a dust-free environment, so as to avoid dust adhesion on the topcoat to affect the preparation effect of the product.
16. Drying of UV nano-matte skin-touch coating material: the UV nano-matte skin-touch coating material is pre-cured via a pre-curing lamp 310, and then further cured via a plurality of UV nano-lamps 410; matte treatment is performed on the coated coating material to generate a skin-touch effect; or a nano-matte machine for a skin-touch panel of the present invention is adopted, where pre-curing energy requires an adjustment value of 50%, and the nano-matte lamps are fully turned on.
17. UV drying: UV drying is performed on the shaped panel with a skin-touch matte effect, where the energy is required to reach UVA= 400-450 mJ/cm².

### Specific embodiment 3:

1. Sanding machine: a surface of a substrate is lightly polished once using the sanding machine, so as to remove burrs on a panel surface.
2. Dust removal machine: dust is cleaned from the surface of the substrate, so as to prevent affecting adhesion between a next UV paint and the substrate due to the dust on the panel surface.
3. Single roller: a UV adhesion primer is applied on the surface of the substrate via roll coating, where the coating amount is controlled at 12 g/m².
4. UV dryer: the UV adhesion primer applied on the substrate via roll coating is dried and cured, where the energy requirement is as follows: UVA= 150-200 mJ/cm².
5. Single roller: a layer of UV solid color primer is further applied on the dried UV adhesion primer via roll coating, where the coating amount is controlled at 8-10 g/cm².
6. UV dryer: the UV solid color primer applied on the substrate via roll coating is dried and cured, where the energy requirement is as follows: UVA= 150-200 mJ/cm².
7. Sanding machine: a surface of the UV solid color primer on the surface of the substrate is lightly polished once using the sanding machine, so as to remove paint bright spots.
8. Dust removal machine: dust is cleaned from the surface of the substrate, so as to prevent affecting adhesion between a next UV paint and the substrate due to the dust on the panel surface.
9. Single roller: it is confirmed that the dust is completely removed, and a UV solid color topcoat is applied on the surface of the polished UV solid color primer via roll coating, where the coating amount is controlled at 6-8 g/cm².
10. UV dryer: the UV solid color topcoat applied on the substrate via roll coating is dried and cured, where the energy requirement is as follows: UVA= 150-200 mJ/cm².
11. Forward and reverse roller: a nano-matte skin-touch coating material is applied on the surface of the substrate via roll coating, where the coating amount of the coating material is controlled at 35 g/m², and this process has some requirements for the environment, and it is best to complete the process in a dust-free environment if permitted.
12. Drying of UV nano-matte skin-touch coating material: the UV nano-matte skin-touch coating material is pre-cured via a pre-curing lamp 310, and then further cured via a plurality of UV nano-lamps 410; matte treatment is performed on the coated coating material to generate the skin-touch effect; or the nano-matte machine for a skin-touch panel of the present invention is adopted, where the pre-curing energy requires an adjustment value of 50%, and the nano-matte lamps are fully turned on.
13. Drier: final UV drying and curing is performed on the finished and shaped substrate with the skin-touch matte effect, where the energy is required to reach UVA = 400-450 mJ/cm², for full drying.

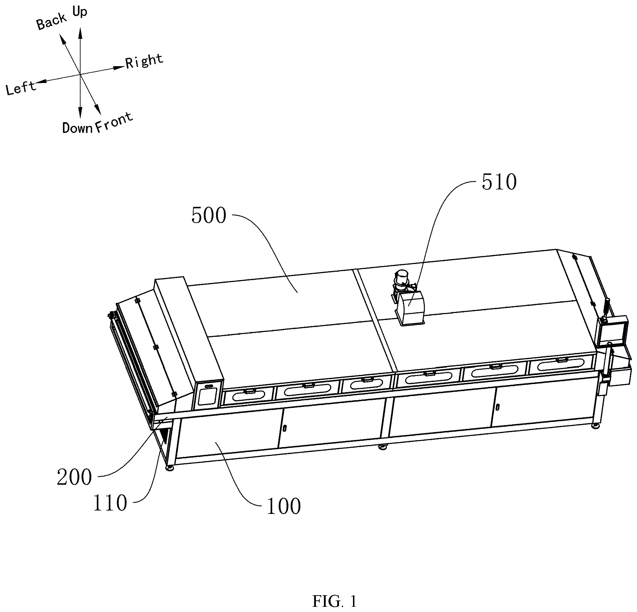

As shown in Figs. 1, 2, 3, and 4, a nano-matte machine for a skin-touch substrate according to an embodiment of a second aspect of the present invention includes a frame 100, a conveying device 200, a first curing assembly 300, and a second curing assembly 400. The conveying device 200 is installed on a top of the frame 100 for conveying a substrate. The first curing assembly 300 is arranged at an inlet end of the conveying device 200, and located above the conveying device 200; and the first curing assembly 300 includes a pre-curing lamp 310. The second curing assembly 400 is arranged on a right side of the first curing assembly 300, and located above the conveying device 200. The second curing assembly 400 includes a plurality of UV nano-lamps 410, and the plurality of UV nano-lamps 410 are arranged at intervals in a conveying direction of the conveying device 200.

The conveying device 200 is configured for conveying a substrate located at a left end of the frame 100 to a right end of the frame 100. The first curing assembly 300 is located above the left end of the conveying device 200, and the second curing assembly 400 is located above the conveying device 200 and on the right side of the first curing assembly 300.

The plurality of nano-lamps may be arranged at intervals in a left-right direction. Specifically, the plurality of nano-lamps may be evenly arranged at intervals in the left-right direction. It is conceivable that the plurality of UV nano-lamps 410 may be divided into at least three lamp groups, each lamp group is provided with several UV nano-lamps 410, and a plurality of lamp groups or a plurality of UV nano-lamps 410 are evenly arranged at intervals in a left-right direction of the conveying device 200, so that the UV nano-lamps 410 irradiate the UV nano-matte skin-touch coating material more evenly, making the skin-touch effect better.

By arranging the conveying device 200 for conveying the substrate on the frame 100, and arranging the pre-curing lamp 310 and the plurality of UV nano-lamps 410 above the conveying device 200, when the substrate is conveyed on the conveying device 200, the skin-touch UV coating material on the substrate absorbs ultraviolet light of the pre-curing lamp 310 and ultraviolet light of the UV nano-lamps 410 in sequence to form the skin-touch effect. In comparison with the prior art which adopts a film pressing manner to produce the skin-touch panels, no skin-touch film is required, and the UV nano-lamp 410 has a long service life without frequent replacement during use, thereby reducing the cost and facilitating production. In comparison with the prior art adopting the 172 nm excimer technology, the protection of inert gas is no longer required, which is economical and efficient, and reduces the cost of production and use.

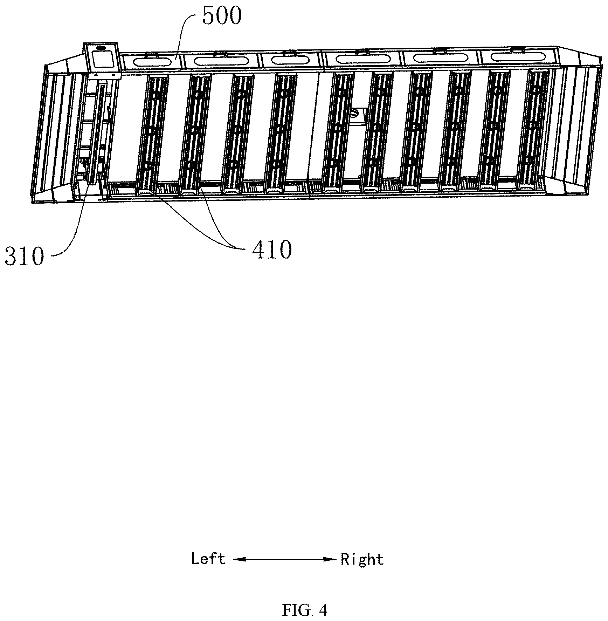

In a further embodiment of the present invention, as shown in Figs. 1 and 4, the nano-matte machine further includes a protective cover 500. The protective cover 500 is installed on the conveying device 200, and provided with a feed inlet and a discharge outlet corresponding to the inlet end and the outlet end of the conveying device 200. The pre-curing lamp 310 and the UV nano-lamps 410 are all arranged within the protective cover 500.

For example, the protective cover 500 is in a shape of the Chinese character "door" to enclose the conveying device 200, so that the substrate can only enter from the feed inlet and exit from discharge outlet. The conveying device 200 is provided with the protective cover 500, so as to implement a dust prevention effect and an ultraviolet light protection effect.

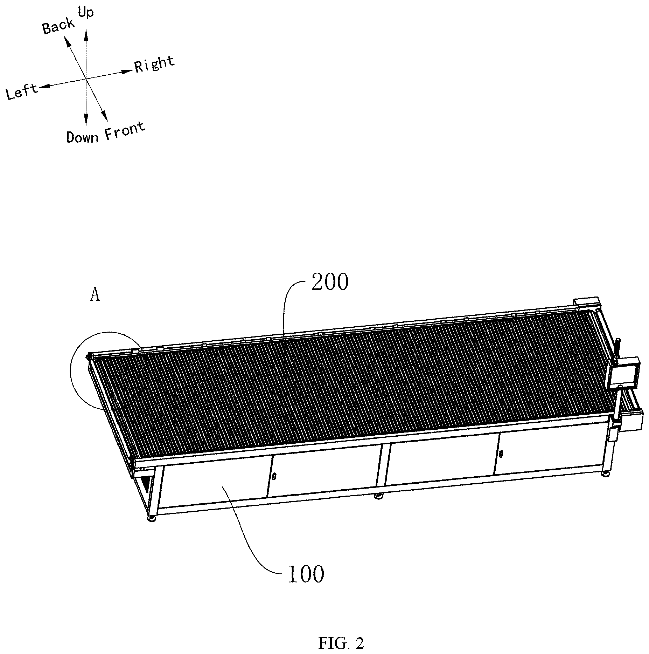

In a further embodiment of the present invention, as shown in Figs. 1 and 2, the conveying device 200 is a chain conveyor, the frame 100 is provided with a first ventilation and heat dissipation device 110, the protective cover 500 is provided with a second ventilation and heat dissipation device 510, and an interior of the frame 100 communicates with an interior of the protective cover 500.

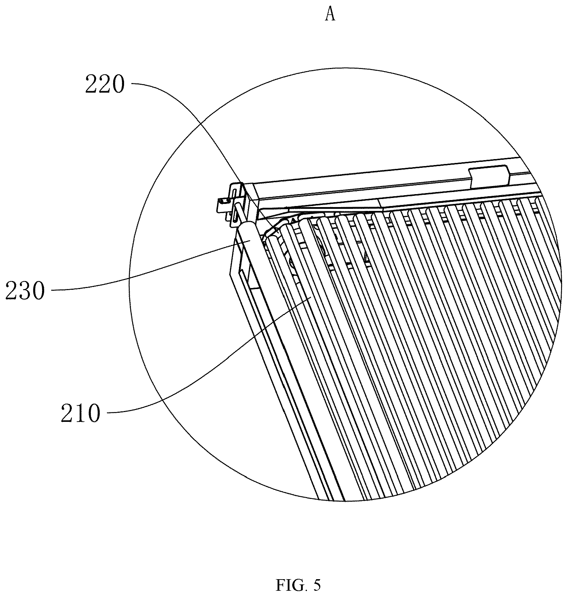

For example, as shown in Figs. 2 and 5, the chain conveyor includes a plurality of transmission shafts 210 and a transmission structure. The transmission structure includes two chains 220 and a motor, and the two chains 220 are spaced apart in a front-back direction. A driving wheel and a driven wheel are provided within each of the two chains 220, and the motor is connected to the driving wheels. Front ends of the plurality of transmission shafts 210 are connected to one of the chains 220, and rear ends of the plurality of transmission shafts 210 are connected to the other chain 220. In operation, a substrate is placed on the plurality of transmission shafts 220, and the motor drives the two chains 220 to move, which in turn brings the substrate to move from left to right. The frame 100 is provided with the first ventilation and heat dissipation device 110; the first ventilation and heat dissipation device 110 is configured for preventing electrical components in the frame 100 from overheating; the second ventilation and heat dissipation device 510 is configured for preventing the interior of the protective cover 500 from overheating; and the frame 100 and the protective cover 500 communicate with each other to improve a heat dissipation effect. In addition, the chain conveyor is used, and there is an interval between every two transmission shafts 210, so as to increase a heat dissipation area and further improve the heat dissipation effect.

Specifically, each chain has an upper straight section and a lower straight section, and there is a partition plate, which functions as dust prevention and heat insulation, between the upper straight section and the lower straight section. Each of the first ventilation and heat dissipation device 110 and the second ventilation and heat dissipation device 510 includes an exhaust fan.

In a further embodiment of the present invention, the pre-curing lamp 310 is an LED lamp, a UV gallium lamp, a mercury lamp or an electrodeless lamp.

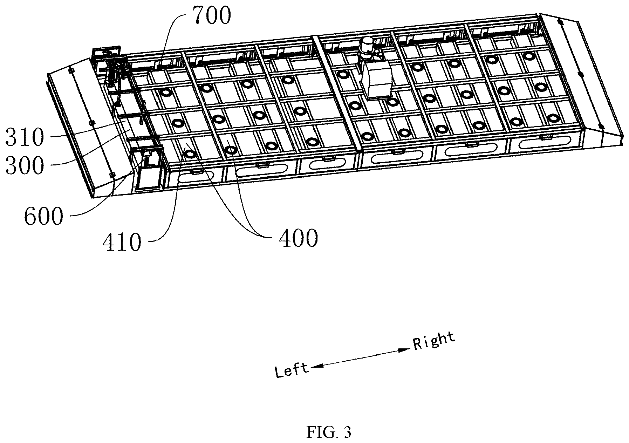

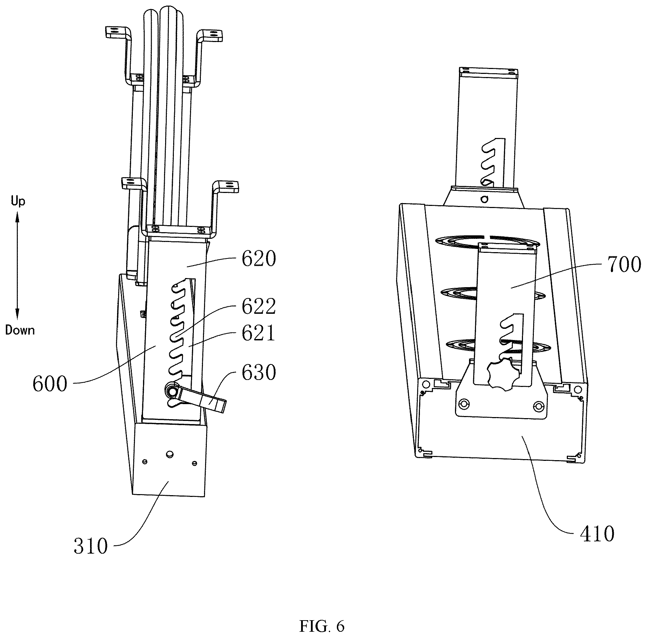

In a further embodiment of the present invention, as shown in Figs. 3 and 6, the pre-curing lamp 310 is provided with a first adjustment structure 600 for adjusting a height and an irradiation angle, and each UV nano-lamp 410 is provided with a second adjustment structure 700 for adjusting a height and an irradiation angle. It is possible to flexibly adjust the working heights and the irradiation angles of the pre-curing lamp 310 and the UV nano-lamps 410, and then it is possible to machine flat surfaces with the flat skin touch and machine special-shaped surfaces with the stereoscopic skin touch.

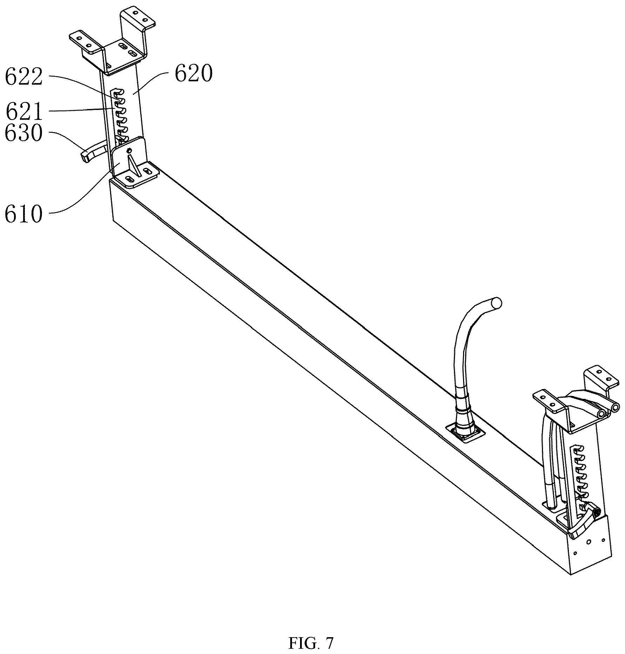

In a further embodiment of the present invention, as shown in Figs. 6 and 7, the first adjustment structure 600 has the same structure as the second adjustment structure 700. Two first adjustment structures 600 are provided, and respectively arranged at two ends of the pre-curing lamp 310. Each first adjustment structure 600 includes a mounting plate 610, a hoisting rack 620 and a fastening handle 630; the mounting plate 610 is connected with one end of the pre-curing lamp 310; the hoisting rack 620 is provided with a vertical through slot 621 and a plurality of horizontal through slots 622 arranged at intervals in an up-down direction; one ends of the horizontal through slots 622 communicate with the vertical through slot 621; and one end of the fastening handle 630 passes through the vertical through slot 621 and is in threaded connection with the mounting plate 610.

For example, a hoisting plate is installed on the frame 100 through a bracket, so that the hoisting plate is located above the conveying device 200. When the fastening handle 630 is tightened, the mounting plate 610 can be fixed on the hoisting rack 620, and then the pre-curing lamp 310 is fixed on the hoisting rack 620.

When it needs to adjust the angle of the pre-curing lamp 310, the fastening handle 630 is unscrewed to rotate the pre-curing lamp 310, and then the fastening handle 630 is tightened to fix the pre-curing lamp 310.

When it needs to adjust the height, the fastening handle 630 is unscrewed, so that the fastening handle 630 may slide in the vertical through slot 621 and the horizontal through slots, moves from the horizontal through slot at a lower position into the vertical through slot 621, then moves into the horizontal through slot at a higher position, and then is tightened to complete height adjustment.

In a further embodiment of the present invention, as shown in Fig. 5, each of the outlet end and the inlet end of the conveying device 200 is provided with a transition roller 230. The transition roller 230 is configured for auxiliary support and reduction in a span, so that a short and small workpiece can also successfully enter the conveying device 200 or move out of the conveying device 200.

Specifically, the protective cover 500 may be provided with an observation window, which is convenient for observing working conditions of the UV nano-lamps 410.

In the description of the specification, descriptions with reference to the terms "some embodiments" or "it is conceivable that", etc. mean that specific features, structures, materials or characteristics described in combination with the embodiments or examples are included in at least one embodiment or example of the present invention. In this specification, schematic representations of the above terms do not necessarily refer to the same embodiment or example. Furthermore, the specific features, structures, materials or characteristics described may be combined in a suitable manner in any one or more embodiments or examples.

Although the embodiments of the present invention have been shown and described, those having ordinary skills in the art can understand that various changes, modifications, substitutions and variants can be made to these embodiments without departing from the principle and gist of the present invention, and the scope of the present invention is defined by the claims and their equivalents.

## Claims

1. A method for preparing a skin-touch panel, comprising:
painting (S100) a surface of a substrate with a primer;
applying (S200), via roll coating, a UV nano-matte skin-touch coating material on the surface of the substrate; and
pre-curing (S300) the UV nano-matte skin-touch coating material via a pre-curing lamp (310), and performing surface treatment on the UV nano-matte skin-touch coating material via a plurality of UV nano-lamps (410), wherein wavelengths of the UV nano-lamps (410) range from 185nm to 260 nm.

2. The method for preparing a skin-touch panel of claim 1, wherein the pre-curing lamp (310) is an LED lamp, a UV gallium lamp, a mercury lamp or an electrodeless lamp.

3. The method for preparing a skin-touch panel of claim 1, wherein the wavelengths of the plurality of UV nano-lamps (410) are selected from any combination of one or more of wavelengths between 185 nm and 260 nm.

4. The method for preparing a skin-touch panel of claim 1, wherein a coating amount of the coating material in S200 is set as 35-50 g/m².

5. A nano-matte machine for a skin-touch panel, configured for curing the UV nano-matte skin-touch coating material in the method for preparing a skin-touch panel of any one of claims 1-4;
the nano-matte machine for a skin-touch panel comprising:
a frame (100);
a conveying device (200) installed on a top of the frame (100) for conveying the substrate;
a first curing assembly (300) arranged at an inlet end of the conveying device (200) and located above the conveying device (200), the first curing assembly (300) comprising the pre-curing lamp (310); and
a second curing assembly (400) arranged on a right side of the first curing assembly (300) and located above the conveying device (200), the second curing assembly (400) comprising the plurality of UV nano-lamps (410), and the plurality of UV nano-lamps (410) being arranged at intervals in a conveying direction of the conveying device (200).

6. The nano-matte machine for a skin-touch panel of claim 5, further comprising a protective cover (500), wherein the protective cover (500) is installed on the conveying device (200), and provided with a feed inlet and a discharge outlet corresponding to the inlet end and an outlet end of the conveying device (200), and the pre-curing lamp (310) and the UV nano-lamps (410) are all arranged within the protective cover (500).

7. The nano-matte machine for a skin-touch panel of claim 6, wherein the conveying device (200) is a chain conveyor, the frame (100) is provided with a first ventilation and heat dissipation device (110), the protective cover (500) is provided with a second ventilation and heat dissipation device (510), and an interior of the frame (100) communicates with an interior of the protective cover (500).

8. The nano-matte machine for a skin-touch panel of claim 5, wherein the pre-curing lamp (310) is provided with a first adjustment structure (600) for adjusting a height and an irradiation angle, and each UV nano-lamp (410) is provided with a second adjustment structure (700) for adjusting a height and an irradiation angle.

9. The nano-matte machine for a skin-touch panel of claim 8, wherein the first adjustment structure (600) has the same structure as the second adjustment structure (700); two first adjustment structures (600) are provided, and arranged at two ends of the pre-curing lamp (310); each first adjustment structure (600) comprises a mounting plate (610), a hoisting rack (620), and a fastening handle (630); the mounting plate (610) is connected with one end of the pre-curing lamp (310); the hoisting rack (620) is provided with a vertical through slot (621) and a plurality of horizontal through slots (622) arranged at intervals in an up-down direction; one ends of the horizontal through slots (622) communicate with the vertical through slot (621); and one end of the fastening handle (630) passes through the vertical through slot (621) and is in threaded connection with the mounting plate (610).

10. The nano-matte machine for a skin-touch panel of claim 5, wherein each of the outlet end and the inlet end of the conveying device (200) is provided with a transition roller (230).
